# EUROPÄISCHE PATENTSCHRIFT

(11) **EP 4 382 871 B1**
(45) Veröffentlichungstag und Bekanntmachung des Hinweises auf die Patenterteilung: **13.08.2025**
(21) Anmeldenummer: 23213680.4
(22) Anmeldetag: 01.12.2023
(51) Int. Cl.: G01D 11/24, G01D 5/14, G01D 5/20

(54) **DREHGEBER**
ROTARY ENCODER
ENCODEUR ROTATIF

(30) Priorität: 06.12.2022 DE 102022132346
(43) Veröffentlichungstag der Anmeldung: 12.06.2024
(73) Patentinhaber: HELLA GmbH & Co. KGaA, 59552 Lippstadt (DE)
(72) Erfinder: Berhorst, Jann, 33178 Borchen (DE); KUHLMANN, Sascha, 59590 Geseke (DE); Maßmann, Clemens, 59555 Lippstadt (DE)
(74) Vertreter: Behr-Wenning, Gregor

(56) Entgegenhaltungen:
- DE-A1- 10 156 730
- DE-B4- 102007 063 683
- KR-A- 20130 080 971
- US-A- 6 124 710
- US-A1- 2011 234 208

## Beschreibung

Die vorliegende Erfindung betrifft einen Drehgeber für ein Kraftfahrzeug, eine Baumaschine, eine Landmaschine oder eine Sondermaschine.

### STAND DER TECHNIK

Drehgeber stellen Sensoren für Drehwinkel dar und dienen dazu, Dreh- oder Verschiebebewegungen zweier Komponenten relativ zueinander zu messen. Drehgeber finden vielfältige Verwendung in Kraftfahrzeugen, Bau- und Landmaschinen oder Sondermaschinen, beispielsweise zur Bestimmung einer Querlenkerstellung, einer Pedalstellung oder dem Kippwinkel eines Baggerlöffels.

Beispielsweise offenbart die EP 2 870 434 B1 einen Niveausensor für ein Kraftfahrzeug umfassend ein Gehäuse, einen an dem Gehäuse drehbar gelagerten Rotor und eine von dem Gehäuse zumindest teilweise umschlossene Leiterplatte, die einen Stator in Form von Leiterbahnstrukturen umfasst, wobei das Gehäuse einen außen angeformten Zylinder mit kreisringförmigem Querschnitt aufweist, wobei der Rotor eine Rotorstruktur aufweist, die an einer Außenseite des Rotors angeordnet ist und mit dem Stator korrespondiert, wobei der Rotor in dem Zylinder drehbar geführt und verrastet ist.

Die US 2011/0234208 A1 offenbart eine berührungslos messende Positionssensoranordnung, umfassend: ein Gehäuse; einen drehbar mit dem Gehäuse gekoppelten Drehindikator; eine Hall-Effekt-Sensorvorrichtung, die so beschaffen ist, dass sie eine Änderung des Winkels eines von dem Drehindikator erzeugten Feldes erfasst; und eine flexible umspritzte Schale, die die gesamte Sensoranordnung oder einen Teil davon umschließt und so beschaffen ist, dass sie die Sensoranordnung gegen das Eindringen von Luft, Feuchtigkeit und/oder Schmutz abdichtet.

Die US 6 124 710 A offenbart eine Vorrichtung, umfassend: ein Gehäuse, das so bemessen ist, dass es mit einem Motorgehäuse gekoppelt werden kann, wobei das Gehäuse ein Loch aufweist; ein Kupplungsmittel, das sich aus dem Inneren des Gehäuses durch das Loch hindurch erstreckt, um die Vorrichtung mit einer Motorwelle zu verbinden; ein erstes scheibenförmiges Polstück, das an einer Innenfläche des Gehäuses befestigt ist, so dass ein Loch in dem ersten scheibenförmigen Polstück mit dem Loch in dem Gehäuse fluchtet; einen scheibenförmigen Magneten, der an dem Kupplungsmittel innerhalb des Gehäuses befestigt ist, wobei eine Fläche des scheibenförmigen Magneten eine wechselnde Polarität aufweist; ein zweites scheibenförmiges Polstück, das an der Kopplungseinrichtung angebracht ist und sich zwischen der Kopplungseinrichtung und dem scheibenförmigen Magneten befindet, wobei das erste und das zweite scheibenförmige Polstück einen magnetischen Pfad bilden; und eine Hall-Effekt-Vorrichtung, die an dem Gehäuse angebracht ist, wobei die Hall-Effekt-Vorrichtung zwischen dem ersten scheibenförmigen Polstück und dem scheibenförmigen Magneten angeordnet ist, wobei die Hall-Effekt-Vorrichtung die wechselnde Polarität auf der Fläche des scheibenförmigen Magneten abtastet, wenn sich die Kupplungseinrichtung dreht.

Die KR 2013 0080971 A offenbart eine Drehwinkelsensoreinheit, umfassend eine Drehwelle, ein Gehäuse, eine Abdeckeinheit und eine umspritzte Kappeneinheit. Die Drehwelle ist mit einem Rotationsobjekt verbunden. Das Gehäuse nimmt die Drehwelle an einer geöffneten Seite auf. Die Abdeckeinheit befindet sich in der geöffneten Seite des Gehäuses und umfasst eine erste Abdeckeinheit, die ein erstes Durchgangsloch für die Drehwelle enthält, und eine zweite Abdeckeinheit, die ein zweites Durchgangsloch aufweist, dessen Durchmesser größer ist als der Durchmesser des ersten Durchgangslochs auf einer Verlängerungslinie des ersten Durchgangslochs. Die Kappeneinheit wird in das zweite Durchgangsloch eingesetzt und ist so geformt, dass sie ein Einführungsloch aufweist, durch das die Drehwelle in der Mitte hindurchgeht.

Die DE 101 56 730 A1 offenbart eine berührungsfreie Verschiebungserfassungsvorrichtung umfassend einen an einem Drehbauteil (8, 9) befestigten Permanentmagneten, ein an einem Nichtdrehbauteil befestigtes Sensorteil, das eine Verschiebung eines mit einer Welle verbundenen erfassten Gegenstandes erfasst. Die berührungsfreie Verschiebungserfassungsvorrichtung enthält ein Gehäuse zum drehbaren Tragen des Drehbauteils und zum Begrenzen einer Bewegung des Drehbauteils in einer axialen Richtung und einen Halte für eine Berührung mit dem Drehbauteil an einer mit der Mehrzahl von Berührstellen und Begrenzen einer anderen Bewegung des Drehbauteils in der axialen Richtung. Dadurch wird die Bewegung des Drehbauteils in axialer Richtung von dem Halter und dem Gehäuse begrenzt.

Die DE 10 2007 063 683 B4 offenbart eine Vorrichtung zur berührungslosen Erfassung von Relativpositionen zweier relativ zueinander bewegbarer Teile, insbesondere zweier Kraftfahrzeugteile, mit einem Gehäuse, das fest mit dem ersten Teil verbunden ist; wenigstens einem signalgebenden Element, das mit dem zweiten Teil verbunden und relativ zum Gehäuse bewegbar in einem Lagerraum des Gehäuses gelagert ist; wenigstens einem elektrische und/oder elektronische Komponenten aufweisenden signalerfassenden Element, das fest in dem Gehäuse untergebracht ist, wobei das signalerfassende Element in dem Gehäuse allseits eingegossen ist und berührungslos mit dem signalgebenden Element in Wechselwirkung steht; das signalgebende Element auf einer Welle befestigt ist, die im Gehäuse gelagert ist; Mittel vorgesehen sind, um die Welle in axialer Richtung im Lagerraum drehbar festzulegen, wobei die Mittel zur axialen Festlegung der Welle umfassen: einen federnden Sicherungsbügel, eine in der Mantelfläche der Welle eingebrachte Sicherungsnut, eine im Gehäuse angeordnete Ausnehmung, die den Sicherungsbügel aufnimmt und ihn in axialer Richtung hält, wobei der Lagerraum rotationssymmetrisch ausgebildet ist.

Zur Qualifikation für den Betriebseinsatz müssen Drehgeber diversen Funktionsprüfungen unterzogen werden, beispielsweise einer Kraftprüfung, einer Abziehprüfung der mechanischen Verbindungen, oder einer Dichtheitsprüfung gegen eindringende Medien. Aufgrund der Vielzahl an Anwendungen für Drehgeber werden diese in zahlreichen, für die jeweilige Anwendung konfigurierten Ausführungsformen hergestellt, wobei insbesondere die Abmessungen und die Schnittstellen zur Anbindung an externe Komponenten regelmäßig variieren. Jede derartige Ausführungsform muss die zur Qualifikation notwendigen Prüfungen durchlaufen, was in der Praxis einen nachteilig hohen Aufwand bedingt.

### OFFENBARUNG DER ERFINDUNG

Es ist die Aufgabe der vorliegenden Erfindung, eine alternative Ausgestaltung eines Drehgebers für ein Kraftfahrzeug, eine Baumaschine, eine Landmaschine oder eine Sondermaschine vorzuschlagen, wobei insbesondere eine einfache Konfigurierbarkeit konzeptuell zu berücksichtigen ist.

Diese Aufgabe wird ausgehend von einem Drehgeber gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Die Erfindung setzt an einem Drehgeber an, der wenigstens einen Rotor mit einem daran drehfest aufgenommenen Rotorelement, eine Sensoreinheit, die zur Bestimmung einer Winkellage des Rotorelements ausgebildet ist, und ein Gehäuse, wobei die Sensoreinheit in dem Gehäuse aufgenommen und der Rotor an dem Gehäuse drehbar gelagert ist, wobei das Rotorelement in einer Solllage relativ zur Sensoreinheit angeordnet ist, derart, dass eine Drehbewegung des Rotors mittels der Sensoreinheit detektierbar ist. Erfindungsgemäß ist der Rotor mehrteilig ausgebildet und umfasst einen Rotorträger sowie einen daran drehfest aufgenommenen Rotoradapter, wobei der Rotorträger an dem Gehäuse drehbar gelagert ist, und wobei das Rotorelement drehfest an dem Rotorträger aufgenommen ist, wobei der Rotorträger einen buchsenförmigen Aufnahmeabschnitt aufweist, in welchem ein korrespondierender Verbindungsabschnitt des Rotoradapters mittels einer Schnappverbindung aufgenommen ist, wobei der Rotoradapter einen radial abragenden Rotorarm, einen axial abragenden Stift oder eine buchsenförmige Gestalt aufweist.

Die Erfindung geht dabei von dem Gedanken aus, den Drehgeber derart modular aufzubauen, dass mit dem Gehäuse, der Sensoreinheit und dem Rotorträger samt Rotorelement eine zentrale qualifizierte Einheit gebildet ist, die die Sensorfunktion bereitstellt und auch alle sonstigen Erfordernisse für den Betriebseinsatz erfüllt, und die durch Anbinden eines weitgehend beliebig geformten und dimensionierten Rotoradapters einen individuell konfigurierten Drehgeber bildet. Der Rotoradapter stellt die Schnittstelle des Drehgebers zu einer Komponente beispielsweise eines Kraftfahrzeugs dar, etwa einem Querlenker im Fahrwerk. Der Aufwand zur Qualifikation des Drehgebers, insbesondere hinsichtlich der sensorischen Funktionalität, der mechanischen Belastbarkeit und der Dichtheit, beschränkt sich bei Verwendung des erfindungsgemäßen modularen Konzepts auf die Prüfung einer zentralen Einheit und muss somit nicht für jede Konfiguration des Drehgebers von Neuem vorgenommen werden.

Erfindungsgemäß ist der Rotoradapter mittels einer Schnappverbindung an dem Rotorträger aufgenommen. Schnappverbindungen werden durch federndes Einspreizen wenigstens eines Fügepartners aufgebaut, d.h., mittels elastischer Verformung und Rückfederung unter Bildung eines Formschlusses. Beispielsweise weist der Rotoradapter elastisch biegbare Arme mit endseitigen Rastnasen auf, die in korrespondierende Aufnahmen am Rotorträger federnd eingespreizt sind.

Der Rotorträger weist einen buchsenförmigen Aufnahmeabschnitt auf, in welchem ein korrespondierender Verbindungsabschnitt des Rotoradapters aufgenommen ist. Insbesondere weisen der Aufnahmeabschnitt des Rotorträgers und der Verbindungsabschnitt des Rotoradapters jeweils eine im Wesentlichen zylindrische Kontur auf, wobei der Aufnahmeabschnitt hohlzylindrisch ausgebildet ist und einen Aufnahmeraum für den Verbindungsabschnitt bildet.

Erfindungsgemäß weist der Rotoradapter einen radial abragenden Rotorarm, einen axial abragenden Stift oder eine buchsenförmige Gestalt auf. Dadurch sind unterschiedliche Schnittstellen zur Verbindung des Rotors mit einer Komponente etwa eines Kraftfahrzeugs gebildet, wobei das erfindungsgemäß Konzept eines modular aufgebauten Drehgebers eine prinzipiell beliebige Vielfalt an konkreten Ausführungsformen des Rotoradapters ermöglicht. Beispielsweise weist der abragende Rotorarm eine Länge im Bereich von 30 - 120 mm auf, und am distalen Ende des Rotorarms ist ein Verbindungsmittel angeordnet, etwa eine Bohrung zur Aufnahme einer Schraube oder eines Bolzens.

In einer weiteren Ausführungsform umfasst der Drehgeber einen Gehäusesitz, wobei das Gehäuse mittels einer Schnappverbindung an dem Gehäusesitz aufgenommen ist. Der Gehäusesitz stellt die statorseitige Schnittstelle des Drehgebers zur Verbindung mit einer Komponente beispielsweise eines Kraftfahrzeugs dar. Der Gehäusesitz kann in Abhängigkeit von der konkreten Anwendung weitgehend beliebig geformt und dimensioniert sein sowie eine zweckmäßige Anzahl und Anordnung von Verbindungsmitteln, beispielsweise Bohrungen, aufweisen.

Weiterhin umfasst der Drehgeber insbesondere eine Steckerbuchse, wobei die Steckerbuchse mittels einer Schnappverbindung an dem Gehäuse aufgenommen ist, und wobei der Drehgeber elektrische Kontaktmittel umfasst, durch die eine wenigstens mittelbare elektrische Verbindung zwischen der Sensoreinheit und der Steckerbuchse gebildet ist. Die Steckerbuchse bildet die Versorgungs- und Datenschnittstelle zum Ansteuern und Auslesen der Sensoreinheit. Die Steckerbuchse kann für jede konkrete Anwendung des Drehgebers individuell konfiguriert sein.

Betreffend das Messprinzip zur Detektion der Winkellage des Rotorelements relativ zum Stator, d.h., relativ zur Sensoreinheit, kann der erfindungsgemäße Drehgeber unterschiedliche Ausführungsformen realisieren. Insbesondere ist die Sensoreinheit als eine Anordnung von planaren Erreger- und Empfängerspulen auf einer Sensor-Leiterplatte ausgebildet, und das Rotorelement weist eine metallische Leitfähigkeit auf. Der dadurch verwirklichte induktive Winkelsensor ist aus der Druckschrift DE 197 38 836 A1 bekannt. Darin wird ein induktiver Winkelsensor mit einem Statorelement beschrieben, welches eine mit einer periodischen Wechselspannung beaufschlagte Erregerspule sowie mehrere Empfangsspulen aufweist, und einem Rotorelement, welches die Stärke der induktiven Kopplung zwischen Erregerspule und Empfangsspulen in Abhängigkeit seiner Winkelposition relativ zum Statorelement vorgibt, und einer Auswerteschaltung zur Bestimmung der Winkelposition des Rotorelementes relativ zum Statorelement aus den in den Empfangsspulen induzierten Spannungssignalen, wobei das Rotorelement mindestens eine Kurzschlussleitung ausbildet, welche, zumindest über Teilbereiche, in Umfangsrichtung des Rotorelementes eine sich periodisch wiederholende Schleifenstruktur ausbildet. Ein solcher induktiver Winkelsensor zeichnet sich u. a. durch einen kompakten Aufbau, ein hohes erzielbares Auflösungsvermögen und eine besonders hohe Unempfindlichkeit gegenüber Fertigungs- und Einbautoleranzen aus.

Alternativ kann die Sensoreinheit als ein Hall-Sensor oder als ein magnetoresistiver Sensor ausgebildet sein, wobei das Rotorelement aus einem magnetischen Werkstoff gebildet ist. Das Messprinzip des Drehgebers beruht dann auf der Detektion einer Änderung des magnetischen Flusses bei einer Drehbewegung des magnetischen Rotorelements.

In einer vorteilhaften Ausführungsform umfasst der Drehgeber eine Ausgabe-Leiterplatte, die zur Verarbeitung und Ausgabe von durch den Magnetfeldsensor erzeugbaren Messsignalen ausgebildet ist. Mittels der Ausgabe-Leiterkarte kann der Drehgeber für eine konkrete Anwendung dahingehend konfiguriert werden, dass die über die Datenschnittstelle transferierten Signale ein gewünschtes Format aufweisen.

### BEVORZUGTE AUSFÜHRUNGSBEISPIELE DER ERFINDUNG

Weitere, die Erfindung verbessernde Maßnahmen werden nachstehend gemeinsam mit der Beschreibung von bevorzugten Ausführungsbeispielen der Erfindung anhand der Figuren näher dargestellt. Es zeigt in schematischer Darstellung:
- Fig. 1a:: eine Explosionsdarstellung in isometrischer Ansicht eines ersten Ausführungsbeispiels des erfindungsgemäßen Drehgebers,
- Fig. 1b:: eine Seitenansicht des ersten Ausführungsbeispiels,
- Fig. 1c:: eine Frontalansicht des ersten Ausführungsbeispiels,
- Fig. 1d:: eine isometrische Ansicht des ersten Ausführungsbeispiels,
- Fig. 1e:: eine Ansicht von oben des ersten Ausführungsbeispiels,
- Fig. 2:: eine Explosionsdarstellung in isometrischer Ansicht eines zweiten Ausführungsbeispiels, und
- Fig. 3:: eine Explosionsdarstellung in isometrischer Ansicht eines dritten Ausführungsbeispiels.

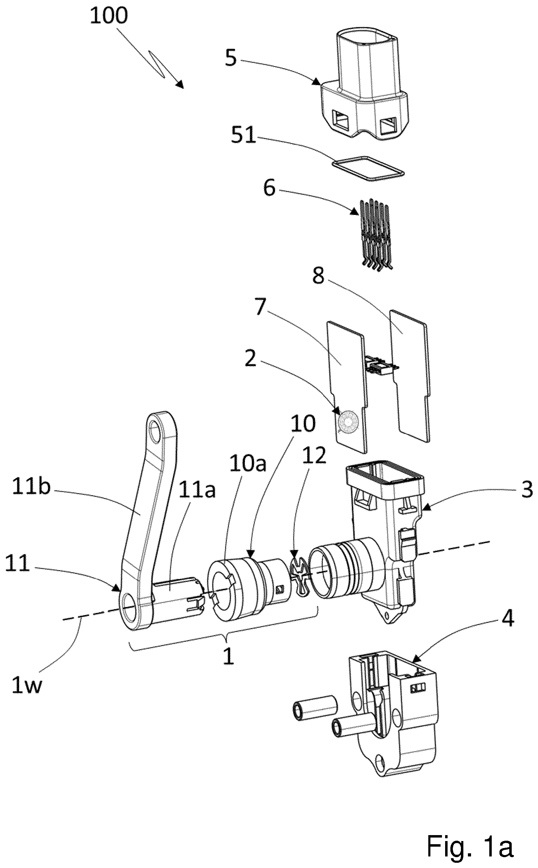

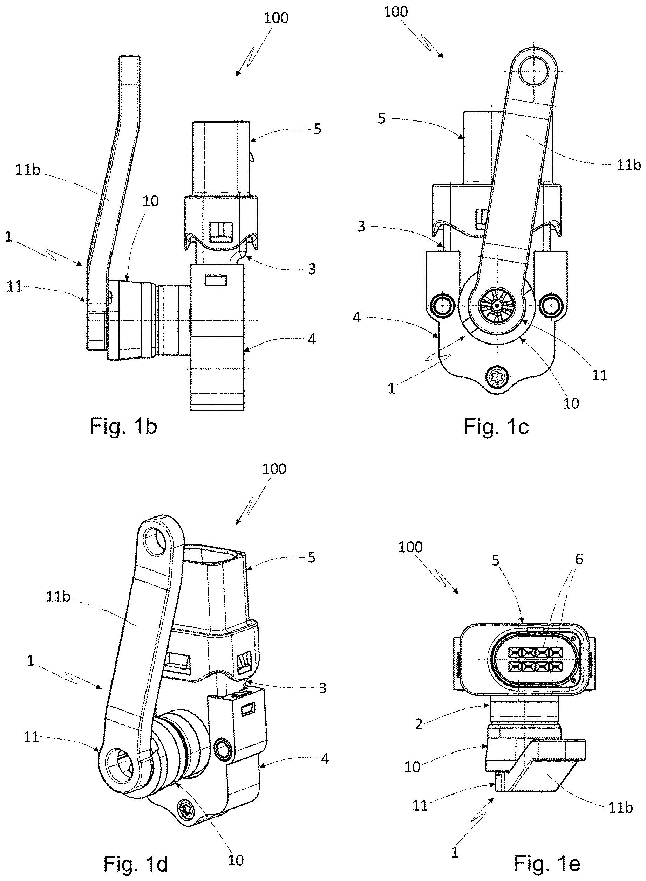

In Fig. 1a - Fig. 1e - ist ein erstes Ausführungsbeispiel des erfindungsgemäßen Drehgebers 100 in unterschiedlichen Ansichten dargestellt. Der Drehgeber 100 umfasst den Rotor 1 mit dem daran drehfest aufgenommenen Rotorelement 12, die Sensoreinheit 2 zur Bestimmung einer Winkellage des Rotorelements 12 und das Gehäuse 3, wobei die Sensoreinheit 2 in dem Gehäuse 3 aufgenommen und der Rotor 1 an dem Gehäuse 3 um die Rotordrehachse 1w drehbar gelagert ist, wobei das Rotorelement 12 in einer Solllage relativ zur Sensoreinheit 2 angeordnet ist, derart, dass eine Drehbewegung des Rotors 1 mittels der Sensoreinheit 2 detektierbar ist. Erfindungsgemäß ist der Rotor 1 mehrteilig ausgebildet und umfasst den Rotorträger 10 sowie den daran drehfest aufgenommenen Rotoradapter 11, wobei der Rotorträger 10 an dem Gehäuse 3 drehbar gelagert ist, und wobei das Rotorelement 12 drehfest an dem Rotorträger 10 aufgenommen ist.

Der Rotorträger 10 ist in einer hohlzylindrischen Anformung des Gehäuses 3 aufgenommen, wobei das Rotorelement 12 stirnseitig am Rotorträger 10 drehfest aufgenommen, beispielsweise im Zuge einer Fertigung des Rotorträgers 10 im Spritzguss umspritzt ist. Das Rotorelement 12 weist eine metallische Leitfähigkeit auf. Die Sensoreinheit 2 ist als eine Anordnung einer planaren Erregerspule und planaren Empfängerspulen auf der Sensor-Leiterplatte 7 ausgebildet. Durch Anlegen einer Wechselspannung an die Erregerspule werden Wirbelströme im Rotorelement 12 induziert, und die daraus resultierende anisotrope Variation des magnetischen Erregerfeldes ist mittels der Empfängerspule detektierbar und einer Winkellage des Rotorelements 12 und damit einer Stellung des Rotors 1 zuordenbar. Das Funktionsprinzip und der prinzipielle Aufbau der Sensoreinheit 2 und des Rotorelements 12 sind in der Druckschrift DE 197 38 836 A1 offenbart.

Der Rotorträger 10 nebst Rotorelement 12, die Sensoreinheit 2 auf der Sensor-Leiterplatte 7 und das Gehäuse 3 bilden die zentrale Einheit des erfindungsgemäßen Drehgebers 100, welche durch Kombination mit den weiteren Komponenten zu einer individuellen Ausführungsform für eine konkrete Anwendung etwa in einem Kraftfahrzeug modular zusammensetzbar ist.

Vorliegend weist der Rotoradapter 11 beispielhaft den radial abragenden Rotorarm 11b auf, dessen distales Ende eine Bohrung für die Verbindung mit einer externen Komponente aufweist. Der Rotoradapter 11 ist mittels einer Schnappverbindung an dem Rotorträger 10 drehfest aufgenommen, wobei der Rotorträger 10 den buchsenförmigen Aufnahmeabschnitt 10a aufweist, in welchem der korrespondierende Verbindungsabschnitt 11a des Rotoradapters 11 aufgenommen ist. An dem Verbindungsabschnitt 11a sind zwei elastisch biegsame Arme mit endseitigen Rastnasen angeformt, die im Inneren des Aufnahmeabschnitts 10a unter Bildung einer Schnappverbindung federnd eingespreizt sind.

Als statorseitige Schnittstelle zu einer Komponente etwa eines Kraftfahrzeugs weist der Drehgeber 100 den Gehäusesitz 4 auf, wobei das Gehäuse 3 mittels einer Schnappverbindung an dem Gehäusesitz 4 aufgenommen ist.

Weiterhin umfasst der Drehgeber 100 die Steckerbuchse 5, die ebenfalls mittels einer Schnappverbindung am Gehäuse 3 aufgenommen ist. Über die in der Steckerbuchse 5 verlaufenden elektrischen Kontaktmittel 6 in Form von Löffelkontakten ist eine elektrische Verbindung zwischen der Sensoreinheit 2 und der Steckerbuchse 5 gebildet, welche auch die Ausgabe-Leiterplatte 8 umfasst, die zur Verarbeitung und Ausgabe von durch die Sensoreinheit 2 erzeugbaren Messsignalen ausgebildet ist. Mittels des Dichtmittels 51 ist das Gehäuse 3 steckerseitig abgedichtet.

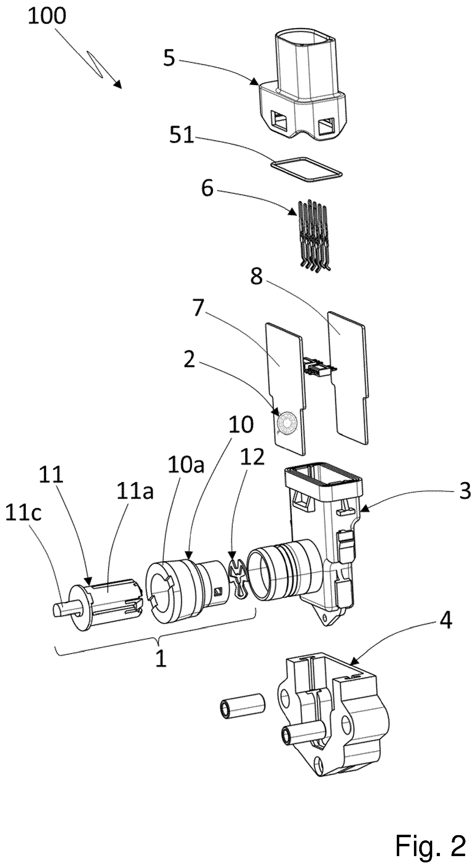

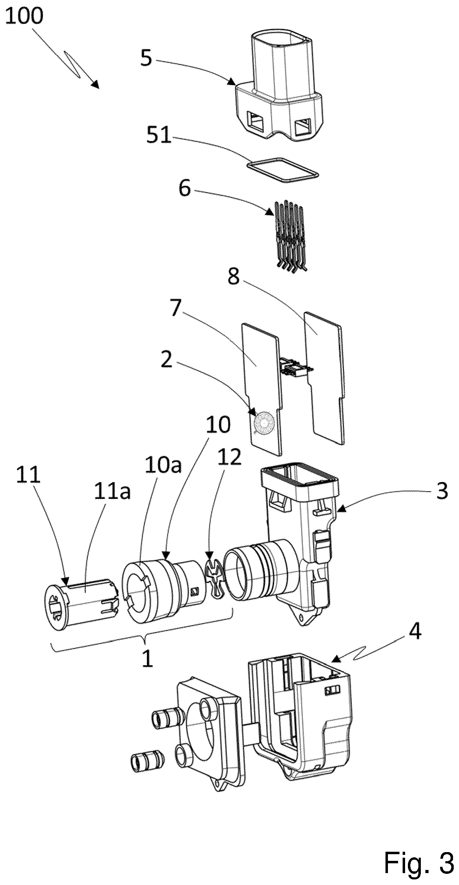

Fig. 2 und Fig. 3 zeigen eine zweites und ein drittes Ausführungsbeispiel des erfindungsgemäßen Drehgebers 100, welche sich von dem vorbeschriebenen ersten Ausführungsbeispiel lediglich in der Ausbildung der Schnittstellen unterscheiden, d.h., des Rotoradapters 11 und des Gehäusesitzes 4. So weist der Rotoradapter 11 in Fig. 2 den axial abragenden Stift 11c auf, und in Fig. 3 ist der Rotoradapter 11 buchsenförmig ausgebildet. Weiterhin weist der Drehgeber 100 in der Fig. 3 einen zweiteiligen Gehäusesitz 4 auf.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten und räumlicher Anordnungen, können sowohl für sich als auch in den verschiedensten Kombinationen erfindungswesentlich sein.

### Bezugszeichenliste

- 100: Drehgeber
- 1: Rotor
- 1w: Rotordrehachse
- 10: Rotorträger
- 10a: Aufnahmeabschnitt
- 11: Rotoradapter
- 11a: Verbindungsabschnitt
- 11b: Rotorarm
- 11c: Stift
- 12: Rotorelement
- 2: Sensoreinheit
- 3: Gehäuse
- 4: Gehäusesitz
- 5: Steckerbuchse
- 51: Dichtmittel
- 6: Kontaktmittel
- 7: Sensor-Leiterplatte
- 8: Ausgabe-Leiterplatte

## Patentansprüche

1. Drehgeber (100) für ein Kraftfahrzeug, eine Baumaschine, eine Landmaschine oder eine Sondermaschine, wenigstens umfassend einen Rotor (1) mit einem daran drehfest aufgenommenen Rotorelement (12), eine Sensoreinheit (2), die zur Bestimmung einer Winkellage des Rotorelements (12) ausgebildet ist, und ein Gehäuse (3), wobei die Sensoreinheit (2) in dem Gehäuse (3) aufgenommen und der Rotor (1) an dem Gehäuse (3) drehbar gelagert ist, wobei das Rotorelement (12) in einer Solllage relativ zur Sensoreinheit (2) angeordnet ist, derart, dass eine Drehbewegung des Rotors (1) mittels der Sensoreinheit (2) detektierbar ist, wobei der Rotor (1) mehrteilig ausgebildet ist und einen Rotorträger (10) sowie einen daran drehfest aufgenommenen Rotoradapter (11) umfasst, wobei der Rotorträger (10) an dem Gehäuse (3) drehbar gelagert ist, und wobei das Rotorelement (12) drehfest an dem Rotorträger (10) aufgenommen ist
**dadurch gekennzeichnet, dass** der Rotorträger (10) einen buchsenförmigen Aufnahmeabschnitt (10a) aufweist, in welchem ein korrespondierender Verbindungsabschnitt (11a) des Rotoradapters (11) mittels einer Schnappverbindung aufgenommen ist, wobei der Rotoradapter (11) einen radial abragenden Rotorarm (11b), einen axial abragenden Stift (11c) oder eine buchsenförmige Gestalt aufweist.

2. Drehgeber (100) nach Anspruch 1, **dadurch gekennzeichnet, dass** der Drehgeber (100) einen Gehäusesitz (4) umfasst, wobei das Gehäuse (3) mittels einer Schnappverbindung an dem Gehäusesitz (4) aufgenommen ist.

3. Drehgeber (100) nach einem der vorgenannten Ansprüche, **dadurch gekennzeichnet, dass** der Drehgeber (100) eine Steckerbuchse (5) umfasst, wobei die Steckerbuchse (5) mittels einer Schnappverbindung an dem Gehäuse (3) aufgenommen ist, und wobei der Drehgeber (100) elektrische Kontaktmittel (6) umfasst, durch die eine wenigstens mittelbare elektrische Verbindung zwischen der Sensoreinheit (2) und der Steckerbuchse (5) gebildet ist.

4. Drehgeber (100) nach einem der vorgenannten Ansprüche, **dadurch gekennzeichnet, dass** die Sensoreinheit (2) als eine Anordnung von planaren Erreger- und Empfängerspulen auf einer Sensor-Leiterplatte (7), als ein Hall-Sensor oder als ein magnetoresistiver Sensor ausgebildet ist.

5. Drehgeber (100) nach einem der vorgenannten Ansprüche, **dadurch gekennzeichnet, dass** der Drehgeber (100) eine Ausgabe-Leiterplatte (8) umfasst, die zur Verarbeitung und Ausgabe von durch die Sensoreinheit (2) erzeugbaren Messsignalen ausgebildet ist.

## Claims

1. A rotary encoder (100) for a motor vehicle, construction machine, agricultural machine or special machine, comprising at least a rotor (1) with a rotor element (12) mounted non-rotatably thereon, a sensor unit (2) designed to determine an angular position of the rotor element (12), and a housing (3), said sensor unit (2) being mounted in the housing (3) and said rotor (1) being mounted rotatably on the housing (3) with the rotor element (12) being arranged in a desired position relative to the sensor unit (2) in such a way that a rotary movement of the rotor (1) can be detected by means of the sensor unit (2), said rotor (1) being constructed of several parts and comprising a rotor carrier (10) and a rotor adapter (11) mounted non-rotatably thereon, said rotor carrier (10) being rotatably mounted on the housing (3), and said rotor element (12) being mounted non-rotatably on the rotor carrier (10),
**characterized in that** the rotor carrier (10) has a socket-shaped receiving section (10a) in which a corresponding connecting section (11a) of the rotor adapter (11) is received by means of a snap connection, said rotor adapter (11) having a radially projecting rotor arm (11b), an axially projecting pin (11c) or a socket-shaped form.

2. A rotary encoder (100) according to Claim 1, **characterized in that** the rotary encoder (100) has a housing seat (4) with the housing (3) being accommodated on the housing seat (4) by means of a snap connection.

3. A rotary encoder (100) according to one of the preceding claims, **characterized in that** the rotary encoder (100) comprises a plug socket (5) with said plug socket (5) being accommodated on the housing (3) by means of a snap connection, and wherein said rotary encoder (100) comprises electrical contact means (6) via which an at least indirect electrical connection is established between the sensor unit (2) and the plug socket (5).

4. A rotary encoder (100) according to one of the preceding claims, **characterized in that** the sensor unit (2) being formed as an arrangement of planar exciter and receiver coils on a sensor printed circuit board (7), as a Hall sensor or as a magnetoresistive sensor.

5. A rotary encoder (100) according to one of the preceding claims, **characterized in that** the rotary encoder (100) comprises an output circuit board (8) designed to process and output measurement signals that can be generated by the sensor unit (2).

## Revendications

1. Encodeur (100) pour un véhicule, un engin de chantier, une machine agricole ou une machine spéciale, comprenant au moins un rotor (1) avec un élément de rotor (12) logé sur celui-ci de manière à résister à la torsion, une unité de capteur (2) conçue pour déterminer une position angulaire de l'élément de rotor (12), et un boîtier (3), l'unité de capteur (2) étant logée dans le boîtier (3) et le rotor (1) étant monté de manière à pouvoir tourner sur le boîtier (3), l'élément de rotor (12) étant disposé dans une position prédéfinie par rapport à l'unité de capteur (2) de telle sorte qu'un mouvement de rotation du rotor (1) puisse être détecté au moyen de l'unité de capteur (2), le rotor (1) étant constitué de plusieurs parties et comprenant un support de rotor (10) ainsi qu'un adaptateur de rotor (11) logé sur celui-ci de manière à résister à la torsion, le support de rotor (10) étant monté de manière à pouvoir tourner sur le boîtier (3) et l'élément de rotor (12) étant logé de manière à pouvoir tourner sur le support de rotor (10)
**caractérisé en ce que, en ce que** le support de rotor (10) présente une section de logement (10a) en forme de douille, dans laquelle une section de liaison (11a) correspondante de l'adaptateur de rotor (11) est logée par encliquetage, l'adaptateur de rotor (11) présentant un bras de rotor (11b) saillant radialement, une broche (11c) saillant axialement ou une forme en douille.

2. Encodeur (100) selon la revendication 1, **caractérisé en ce que** l'encodeur (100) comprend un siège de boîtier (4), le boîtier (3) étant logé sur le siège de boîtier (4) au moyen d'un assemblage par encliquetage.

3. Encodeur (100) selon l'une des revendications précédentes, **caractérisé en ce que** l'encodeur (100) comprend une prise femelle (5), la prise femelle (5) étant logée sur le boîtier (3) au moyen d'un assemblage par encliquetage et l'encodeur (100) comprend des moyens de contact électriques (6) au moyen desquels au moins une connexion électrique directe est établie entre l'unité de capteur (2) et la prise femelle (5).

4. Encodeur (100) selon l'une des revendications précédentes, **caractérisé en ce que** l'unité de capteur (2) est conçue comme un ensemble de bobines d'excitation et de réception planes sur une carte de circuit imprimé de capteur (7), comme un capteur à effet Hall ou comme un capteur magnétorésistif.

5. Encodeur (100) selon l'une des revendications précédentes, **caractérisé en ce que** l'encodeur (100) comprend une carte de circuit imprimé de sortie (8) conçue pour traiter et délivrer des signaux de mesure pouvant être générés par l'unité de capteur (2).
